Europäisches Patentamt

European Patent Office

Office européen des brevets

(11) Veröffentlichungsnummer: **0 047 326**
**B1**

(12) **EUROPÄISCHE PATENTSCHRIFT**

(45) Veröffentlichungstag der Patentschrift:
**31.10.84**

(21) Anmeldenummer: **80104962.8**

(22) Anmeldetag: **21.08.80**

(51) Int. Cl.³: **G 06 K 19/08,** G 06 K 1/12,
G 03 H 1/00

(54) Ausweiskarte, die Information in holographischer Form enthält.

(43) Veröffentlichungstag der Anmeldung:
**17.03.82 Patentblatt 82/11**

(45) Bekanntmachung des Hinweises auf die Patenterteilung:
**31.10.84 Patentblatt 84/44**

(84) Benannte Vertragsstaaten:
**DE FR GB**

(56) Entgegenhaltungen:
**DE - A - 1 939 594**
**DE - A - 2 166 913**
**DE - A - 2 441 343**
**DE - A - 2 613 034**
**DE - A - 2 659 639**
**FR - A - 2 321 158**
**US - A - 3 620 590**
**US - A - 3 858 031**

**OPTICS COMMUNICATIONS, Band 19, Nr. 2, November
1976, Seiten 232-235, Amsterdam, NL. W. LUKOSZ et al.:
"Hologram recording and read-out with the evanescent
field of guided waves"**

(73) Patentinhaber: **International Business Machines
Corporation, Old Orchard Road, Armonk, N.Y. 10504 (US)**

(72) Erfinder: **Chevillat, Pierre, Breitenstrasse 17,
CH-8134 Adliswil/ZH (CH)**
Erfinder: **Gfeller, Fritz, Albisstrasse 88,
CH-8134 Adliswil/ZH (CH)**

(74) Vertreter: **Möhlen, Wolfgang, Dipl.-Ing., c/o International
Business Machines Corporation Zürich Patent
Operations Säumerstrasse 4, CH-8803 Rüschlikon/ZH
(CH)**

## Beschreibung

Die Erfindung bezieht sich auf eine Ausweiskarte, die Information in holographischer Form enthält. Solche Karten können vielseitige Verwendung finden, beispielsweise als Kreditkarten oder als Karten, die dem rechtmäßigen Inhaber Zutritt zu Örtlichkeiten mit beschränkter Zulassung gewähren.

Ähnliche Ausweiskarten, deren Information aber durch Lochung oder magnetisch gespeichert ist, sind schon länger bekannt. Ihr Hauptnachteil ist, daß sie leicht kopierbar sind und deshalb mit ihnen leicht Mißbrauch getrieben werden kann. Auf der Suche nach Methoden zur Erhöhung der Sicherheit gegen Fälschung und Nachahmung bietet daher die Halographie gewisse Möglichkeiten. In der deutschen Patentschrift 1 939 594 ist beispielsweise eine Dokumentenkarte beschrieben, die eine bestimmte Zahl in binär kodierter Form als konventionelles Amplituden- oder Phasenhologramm gespeichert hat. Wenn auch die Wiedergewinnung der Information in diesem Fall etwas schwieriger wird, so kann ein Unbefugter dennoch unter Einsatz vermehrter phototechnischer Mittel die Information ermitteln. Sogar Fälschungen wären möglich, da ein Austausch solcher Hologramme nicht ausgeschlossen werden kann.

Ausweiskarten, die der Benutzer oft braucht und daher in irgend einer Tasche mit sich führt, sind stark der Abnutzung und der Beschädigungsgefahr unterworfen. Das Signal/Stör-Verhältnis von Amplituden- und Phasenhologrammen hat sich in der Erfahrung als relativ schlecht herausgestellt. Kommt dazu noch eine Verminderung wegen Abnutzung oder Beschädigung, dann ist eine solche Ausweiskarte sehr bald unbenützbar. In der deutschen Offenlegungsschrift 2 613 034 ist beschrieben, wie für eine Ausweiskarte mit Lippmann-Bragg-Hologramm ein besseres Signal/Stör-Verhältnis erzielt werden kann, indem das Hologramm auf die ganze Kartenfläche ausgedehnt wird. Dieser Umstand verspricht einerseits Abhilfe, beschränkt aber die aufzuzeichnende Informationsmenge erheblich. Außerdem kann dieses Hologramm von Unbefugten relativ einfach gelesen werden, wenn auch eine Nachahmung nicht so einfach wäre.

Um die Fälschungssicherheit zu erhöhen, ist in der deutschen Offenlegungsschrift 2 166 913 ein Verfahren dargelegt, bei welchem ein Informationshologramm durch Einführung willkürlicher Gangunterschiede in einem der Strahlengänge mittels eines Strahlenverzerrers bei seiner Herstellung verschlüsselt wird. Ohne genaue Kenntnis des Schlüssels für den verzerrten Strahlengang kann beim Auslesen des Hologramms die Verzerrung nicht kompensiert und die aufgezeichnete Information nicht erkannt werden. Aber auch eine Karte mit einem verschlüsselten, konventionellen Hologramm leidet im übrigen unter dem ungünstigen Signal/Stör-Verhältnis und läuft Gefahr bei häufigem Gebrauch rasch abgenützt oder beschädigt zu werden.

In einem Artikel »Hologramm recording and read-out with the evanescent field of guided waves« beschreiben die Autoren W. Lukosz und A. Wüthrich in Optics Communications Vol. 19, No. 2, November 1976, die Aufzeichnung und das Auslesen von Hologrammen, wobei das abklingende Feld einer in einem planaren Wellenleiter sich fortpflanzenden Lichtwelle als Bezugs- bzw. Beleuchtungswelle benutzt wird. Diese Methode verspricht vor allem weniger Störanfälligkeit und ein größeres Gesichtsfeld für das Hologramm zu erbringen, was ganz dem Zweck der vorliegenden Erfindung entspricht.

Die Erfindung, die im Anspruch 1 gekennzeichnet ist, wird nachstehend anhand von Ausführungsbeispielen mit Zeichnungen genau beschrieben. Es zeigt

Fig. 1 den Aufbau einer Ausweiskarte und die Wirkungsweise eines Wellenleiter-Hologramms,

Fig. 2 schematisch das Aufzeichnen eines Wellenleiter-Hologramms gemäß Fig. 1,

Fig. 3 schematisch das Auslesen eines Wellenleiter-Hologramms gemäß Fig. 1,

Fig. 4 ein Ausführungsbeispiel einer erfindungsgemäßen Ausweiskarte mit Wellenleiterhologrammen,

Fig. 5—7 weitere Beispiele solcher Ausweiskarten mit je einer Darstellung, die zeigt, wie ein oder mehrere Hologramme zerstört bzw. unbenutzbar gemacht werden können,

Fig. 8 den prinzipiellen Aufbau einer Vorrichtung zum seriellen Auslesen einzelner Wellenleiter-Hologramme einer erfindungsgemäßen Ausweiskarte,

Fig. 9 die schematische Darstellung einer Auswerteschaltung mit automatischer Schwellenwerteinstellung zum Ausgleich von Helligkeitsunterschieden,

Fig. 10 die Darstellung eines Strahlenverlaufs beim Durchstrahlen eines Hologramms zwischen zwei Schutzschichten, von denen eine durch Kratzer beschädigt ist.

Fig. 11 einen Strahlenverlauf beim Auslesen eines Wellenleiter-Hologramms mit beschädigter Schutzschicht, und

Fig. 12 die Prinzip-Darstellung einer verschlüsselten Lichteinstrahlung in einem Lichtwellenleiter über einen Eingangsgitterkoppler, der als Quellenhologramm ausgebildet ist.

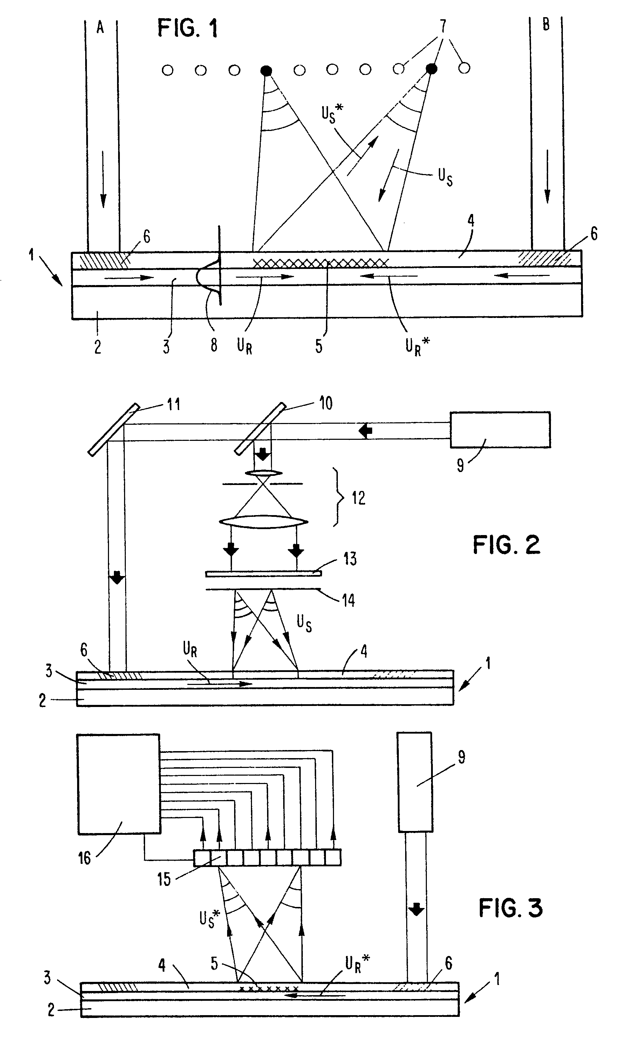

In der Fig. 1 ist bildlich der prinzipielle Aufbau einer Ausweiskarte oder Vorrichtung 1 mit optischem Wellenleiter und Wellenleiter-Hologramm dargestellt. Dieser Aufbau basiert auf einem Substrat 2, auf dem ein planarer Wellenleiter 3 für Lichtstrahlung und darüber eine lichtempfindliche Schicht 4 aufgebracht sind. Der Dickenmaßstab der Zeichnung ist willkürlich groß gewählt, um die einzelnen Schichten besser darstellen zu können. Die lichtempfindliche Schicht 4 umfaßt ein Wellenleiterhologramm 5, das Information enthält, und am linken sowie rechten Rand je einen Gitterkoppler 6. Diese Gitterkoppler dienen dazu, Licht in den optischen Wellenleiter 3 einzukoppeln, und können aus einem entsprechenden Volumenhologramm bestehen, das an passender Stelle der lichtempfindlichen Schicht 4 erzeugt worden ist.

Zur Erzeugung eines Information enthaltenden Wellenleiter-Hologramms wird Strahlung aus einer kohärenten Lichtquelle benötigt, die beispielsweise von der Stelle A aus über den linken Gitterkoppler 6 in den Wellenleiter 3 eingegeben wird. Sie pflanzt sich im Wellenleiter als Bezugswelle $U_R$ in Pfeilrichtung fort und weist eine elektrische Federverteilung auf, die durch die Kurve 8 dargestellt ist. Aus letzterer ist ersichtlich, daß nur ein exponentiell abklingender Teil der Strahlung in geringe Tiefe der lichtempfindlichen Schicht eindringt und dort zu Erzeugung eines Hologramms beiträgt. Die in das Hologramm einzubringende Information ist ein Objekt, das durch eine Anzahl Punktquellen 7 dargestellt ist, welche Objektwellen $U_S$ abstrahlen.

Die Überlagerung der zeitlich kohärenten Strahlungen $U_R$ und $U_S$ in der lichtempfindlichen Schicht 4 an der Grenze zum Wellenleiter 3 erzeugt ein Interferenzmuster und damit ein Hologramm 5. Phototechnische Einzelheiten der Entwicklung und Fixierung dieses Hologramms werden hier nicht beschrieben, da sie nicht Gegenstand der vorliegenden Erfindung sind. Es ist hier noch zu erwähnten, daß die abzubildende Information bzw. das Objekt beliebiger Art sein kann, d. h. es kann lineare oder zweidimensionale Ausdehnung haben, es kann sich um Bild-, Textoder beliebig kodierte Information handeln. Aus Gründen der Vereinfachung wird angenommen, daß die Daten d. h. die abzubildende Information aus einer speziellen Anordnung von Punktquellen besteht, welche ihrerseits einem spezifischen Signal entsprechen.

Die Rekonstruktion der Information aus dem erzeugten Hologramm geschieht nach Grundsätzen, die in der Holographie bekannt sind. Von der Stelle B aus wird die Strahlung einer kohärenten Lichtquelle, die jener bei der Erzeugung des Hologramms gleich ist, auf den Gitterkoppler 6 am rechten Rand gerichtet. Dadurch entsteht im optischen Wellenleiter 3 die konjugierte Bezugswelle $U_R^*$, welche gemäß Pfeil in entgegengesetzter Richtung der früheren Bezugswelle $U_R$ läuft und mit ihrem abklingenden Strahlenanteil das vorher erzeugte Hologramm 5 ausleuchtet. Letzeres gibt unter diesen Umständen die konjugierten Objektstrahlen $U_S^*$ ab, welche am Ort der ursprünglichen Punktquellen 7 zu einem genauen Abbild derselben konvergieren.

Anhand der Fig. 2 soll nun ein Beispiel erläutert werden, das eine mögliche Technik zur Aufzeichnung eines Wellenleiter-Hologramms aufzeigt. Als Strahlenquelle 9 wird ein Laserstrahlgenerator verwendet, der seinen Strahl in Pfeilrichtung auf einen halbdurchlässigen Spiegel 10 als Strahlenleiter richtet. Die durchgelassene eine Strahlenhälfte trifft auf den Ablenkspiegel 11, der diese auf einen Gitterkoppler 6 wirft. Der Gitterkoppler seinerseits erzeugt im Wellenleiter 3 der Vorrichtung 1 die in Pfeilrichtung sich fortpflanzende Bezugswelle $U_R$. Die vom Strahlenteiler 10 abgelenkte andere Strahlenhälfte gelangt in ein telezentrisches Objektiv 12 zur Strahlverbreiterung. Der aus diesem Objektiv austretende Strahl beleuchtet über einen Diffusor 13 eine Lochmaske 14. Die Löcher der Maske stellen eine in beliebiger Weise kodierte Information dar und senden entsprechende Objektoder Signalwellen $U_S$ in Richtung auf die Vorrichtung 1, wo sich in der lichtempfindlichen Schicht 4 beim Zusammentreffen mit der Bezugswelle $U_R$ ein Interferenzmuster bildet. Nach geeigneter photochemischer Entwicklung und Fixierung entsteht daraus ein Wellenleiter-Hologramm 5, wie es in der Fig. 1 dargestellt worden ist.

In der Fig. 3 ist schematisch eine Einrichtung dargestellt, die es erlaubt Wellenleiter-Hologramme 5, die beispielsweise gemäß Fig. 2 hergestellt worden sind, auszulesen und in entsprechende Datensignale zurückzuverwandeln. Ein gleicher Laserstrahlgenerator 9, wie in Fig. 2, wird dazu benutzt, einen Gitterkoppler 6 am rechten Rand der Vorrichtung 1 auszuleuchten. Dadurch wird im optischen Wellenleiter 3, wie bereits anhand der Fig. 1 dargelegt, die konjugierte Bezugswelle $U_R^*$ erzeugt, welche in Pfeilrichtung auf ein vorher aufgezeichnetes Wellenleiter-Hologramm zuläuft. Die Ausleuchtung des Wellenleiter-Hologramms 5 erzeugt wiederum konjugierte Signalstrahlen $U_S^*$, welche an einer gewissen Stelle über dem Hologramm zu einem genauen Abbild der bei der Hologrammaufzeichnung verwendeten Lochmaske 14 von Fig. 2 konvergieren. An dieser Stelle ist eine Anordnung 15 von lichtempfindlichen Detektoren, z. B. Photodioden, angebracht, welche mit einer Auswerteoder Dekodierschaltung 16 verbunden sind.

Wenn die ursprünglich in Fig. 2 benutzte Lochmaske 14 nur eine Anzahl Löcher in einer Reihe enthalten hat, dann genügt als Detektoranordnung 15 beispielsweise eine Reihe von N Photodioden. Es kann aber auch eine Maske mit maximal $N \cdot M$ Löchern in beliebiger Kodierung zur Darstellung der Information benutzt werden. Dann würde die Detektoranordnung 15 durch eine entsprechende Matrix von $N \cdot M$ Photodioden gebildet. Jeder einem Loch der Lochmaske entsprechende Lichtfleck löst dann in einer Photodiode einen Photostrom aus, der mit weiteren Photoströmen in der Dekodierschaltung 16 zur ursprünglichen Information dekodiert wird. Es sei hier noch beigefügt, daß beim Auslesen gemäß Fig. 3 der Laserstrahlgenerator 9 durch eine weniger teure Lichtquelle, z. B. durch eine lichtemittierende Diode (LED), ersetzt werden kann, wenn auf die Erfüllung hoher Ansprüche bezüglich Kontrast der Abbildung verzichtet wird. Dann genügt auch eine partiell kohärente Lichtquelle.

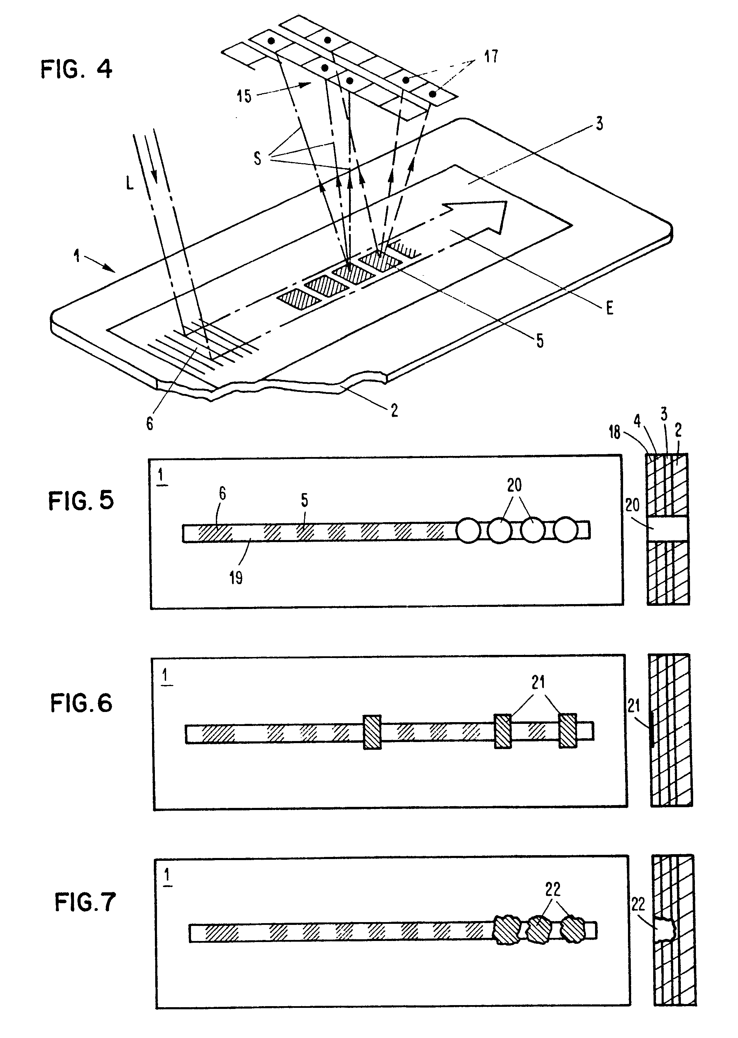

In der Fig. 4 ist eine Ausweiskarte gemäß der vorliegenden Erfindung abgebildet, welche mit der prinzipiellen Vorrichtung 1 aus Fig. 1 übereinstimmt. Die Schichtung der Karte ist hier nur angedeutet. Sie umfaßt vor allem als dickste Komponente das Substrat 2, darüber den optischen Wellenleiter 3, auf welchem sich wenigstens ein Gitterkoppler 6 und mehrere Hologramme 5 mit Information befinden. Zur Vereinfachung sei hier angenommen, daß die Information ursprünglich nur in linearer Ausdehnung, d. h. in Form einer einzelnen Lochreihe pro Hologramm, aufgezeichnet worden ist, sowohl natürlich ebensogut zweidimensional aufgezeichnet werden kann. Ein einzelnes Hologramm entspricht somit einem Muster von Punktquellen, die beim Auslesen als Informationsmuster bestehend aus Lichtflecken 17 abgebildet werden. Wie bereits erläutert, wird bei diesem Vorgang ein wenigstens partiell kohärenter Lichtstrahl L über den Gitterkoppler 6 in den Wellenleiter 3 eingegeben. Darin pflanzt sich seine Energie wellenförmig in der Richtung des Pfeils E fort. Die von den Lichtwellen angeregten Hologramme erzeugen ihrerseits Signalstrahlen S, welche zur Abbildung der genannten Lichtflecke 17 auf der Detektoranordnung 15 konvergieren. Nach Dekodierung liegt also die ursprünglich aufgezeichnete Information zur weiteren Verwendung wieder vor.

Die Verwendung einer Karte gemäß Fig. 4 ist beispielsweise als Personalausweis denkbar, der dem rechtmäßigen Inhaber Zutritt zu Örtlichkeiten mit beschränkter Zulassung verschaffen kann. Die in den Hologrammen aufgezeichnete Information könnte dann aus überprüfbaren, persönlichen Daten des Karteninhabers sowie aus genau zu erfüllenden Zulassungsbedingungen bestehen. Denkbar ist aber auch eine Verwendung als Kreditkarte oder Zahlkarte, wobei die Hologramme Daten über verfügbare Kreditbeträge zur Bezahlung von Einkäufen oder zum Bezug von Bargeld bei Banken enthalten können. Es können auch Einheiten von Münzen oder Banknoten aufgezeichnet sein. Die Aufzeichnung selber kann in rein binärer Form erfolgt sein, es kann stattdessen eine Kodierung z. B. »3 aus 5« oder jeder beliebigen Art benutzt werden.

Anhand der Fig. 5—7 wird gezeigt, daß Hologramme auf der eben beschriebenen Karte gelöscht bzw. unbrauchbar gemacht werden können. In Fig. 5 sind in einem Aufzeichnungsstreifen 19 eine Anzahl Einzelhologramme 5 und ein Gitterkoppler 6 angeordnet. Der zugehörige Querschnitt am rechten Bildrand zeigt, daß die Schichtung wie bisher üblich aussieht: Substrat 2/ Wellenleiter 3 / Photoschicht 4 mit Hologrammen 5. Das Ganze wird aber noch von einer transparenten Schutzschicht 18 überdeckt, um die Karte vor Beschädigung und Abnutzung zu bewahren. Die vier letzten Hologramme am rechten Ende der Karte 1 sind je durch eine Perforation 20 zerstört worden. Die Karte wird also in einer gewissen Zeit verbraucht sein, wenn alle Hologramme unbrauchbar gemacht worden sind.

In der Fig. 6 ist eine Karte 1 dargestellt, bei der an gewissen Stellen 21 die Oberfläche über einzelnen Hologrammen künstlich aufgerauht oder sonstwie undurchsichtig gemacht worden ist.

Die Schutzschicht kann durch Ätzen, Schleifen, Zerkratzen oder Überdecken mit nicht-entfernbarer Farbe opak gemacht werden. Gemäß Fig. 7 kann auch thermische Zerstörung 22 der Schutzschicht und allenfalls der Hologramme in Betracht gezogen werden. Alle diese Löschverfahren sind nicht mehr rückgängig zu machen. Die Löschungen gemäß Fig. 5 und 7, welche den Strahlengang im Wellenleiter 3 stören oder sogar unterbrechen, werden mit Beginn rechts außen aufeinanderfolgend und nach links fortschreitend durchgeführt. Die Löschungen nach Fig. 6 hingegen sind an keine Reihenfolge gebunden.

Die Schutzschicht 18 der Fig. 6 könnte beispielsweise auch eine Flüssigkristallschicht umfassen, die durch Steuerung von außen stellenweise lichtundurchlässig gemacht wird. Dies erlaubt, eine solche Stelle durch äußere Steuerung nach Bedarf wieder lichtdurchlässig zu machen, d. h. ein darunter liegendes Hologramm könnte nachher wieder ausgelesen werden. Dieses Verfahren erlaubt eine längere Wiederverwendung einer erfindungsgemäßen Karte.

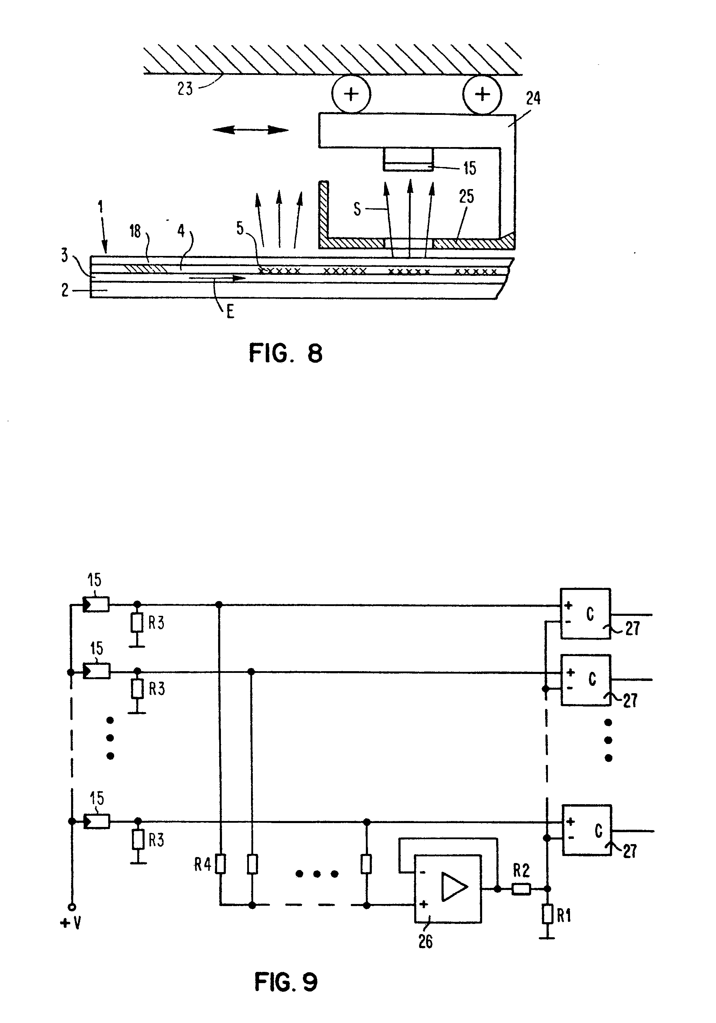

In Fig. 8 ist eine Einrichtung skizziert, mit der eine erfindungsgemäße Karte 1 seriell ausgelesen werden kann. In einem Geräterahmen 23 ist ein Schlitten 24 verschiebbar angeordnet, der an einer Karte 1 vorbeigeführt wird. Der Schlitten trägt eine Abschirmblende 25 mit einer Öffnung, durch die nur die Strahlung S aus einem einzelnen Hologramm 5 dringen kann. Am Schlitten 24 ist auch eine Anordnung 15 von Strahlungsdetektoren, z. B. Photodioden, befestigt. Damit kann das Strahlungsmuster jedes Hologramms einzeln abgetastet werden. Die Abschirmblende 25 verhindert Störungen durch die Strahlung eines dem auszulesenden benachbarten Hologramms. Als Alternative zu dieser Einrichtung kann aber auch eine optische Abtastvorrichtung verwendet werden.

In der Fig. 9 ist eine Auswerteschaltung gezeigt, die zum Ausgleich von Helligkeitsunterschieden über eine automatische Schwellenwerteinstellung verfügt. Einzelne Detektorelemente 15, z. B. Photodioden, sind je mit einem Widerstand R3 in Reihe geschaltet. Trifft Strahlung auf einen Detektor, dann erzeugt der fließende Strom am betreffenden Widerstand R3 eine Signalspannung. Jedes Signal wird der einen Eingangsklemme je eines Komparators 27 zugeführt und gleichzeitig über einen Widerstand R4 dem einen Eingang eines Summierverstärkers 26, dessen Ausgang an seinen zweiten Eingang zwecks Stabilisierung gegengekoppelt ist. Das Summensignal am Ausgang des Verstärkers 26 wird einer Reihenschaltung der Widerstände R1 und R2 zugeführt, wobei der am Widerstand R1 anfallende Teil über eine gemeinsame Leitung den zweiten Eingängen aller Komparatoren 27 zugeführt wird.

Das Spannungsteilerverhältnis R1 / (R1 + R2) am Ausgang des Summierverstärkers 26 hängt davon ab, wie viele Signale gleichzeitig während eines Auswertevorganges am Eingang desselben Verstärkers zu erwarten sind. Wenn beispielsweise davon ausgegangen wird, daß die einzelnen Hologramme Dezimalzahlen enthalten, die gemäß dem Kode »3 aus 5« dargestellt sind, dann erscheinen in der Auswerteschaltung von Fig. 9 gleichzeitig stets drei Signale für jede auszulesende Zahl. Das Summensignal am Ausgang des Verstärkers 26 wird daher vorzugsweise auf $^1/_6$ herabgesetzt, d. h. jeder Komparator 27 erhält als Bezugspegel ein Signal, das ungefähr die Hälfte des vom Photoelement 15 zu erwartenden Signals an seinem positiven Eingang ausmacht. Jeder Komparator kann so zuverlässig entscheiden, ob ein Signal am Eingang vorliegt und ist damit von auftretenden Helligkeitsunterschieden weitgehend unabhängig. Die Ausgänge der Komparatoren 27 werden dann einer Auswertelogik zugeführt, die nach bekannten Grundsätzen aufgebaut sein kann. Es ist noch nachzutragen, daß im oben erwähnten Beispiel das Spannungsteilerverhältnis vom Signalmuster des Kodes unabhängig ist. Bei variabler Anzahl auftretender Signale trifft dies nicht zu.

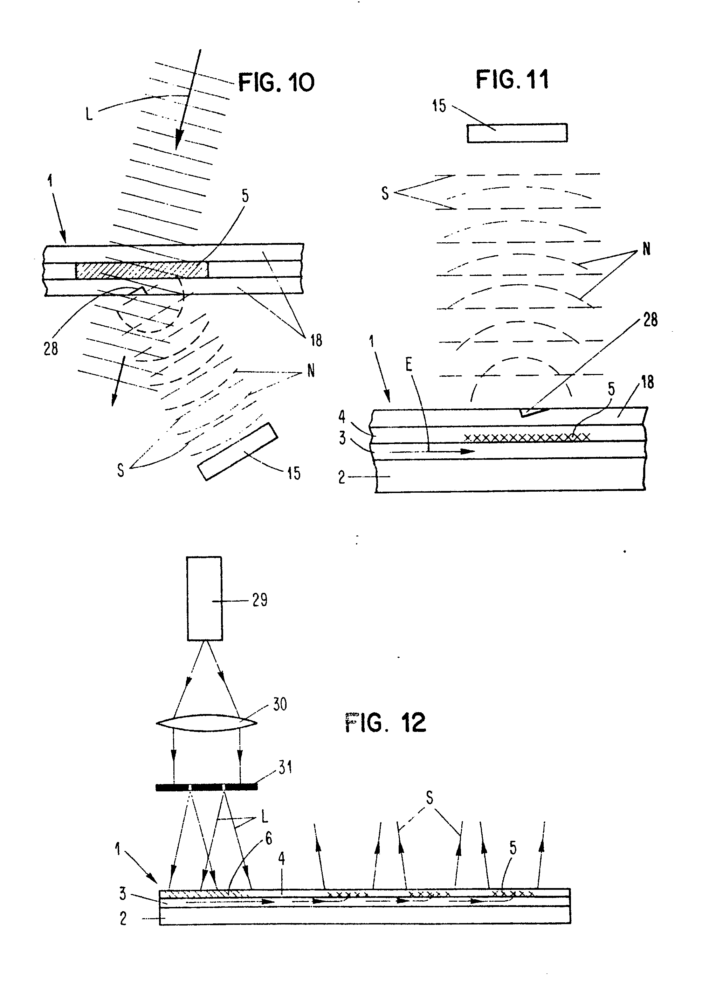

Anhand der Fig. 10 und 11 wird nun gezeigt, daß eine erfindungsgemäße Ausweiskarte 1 mit integriertem Wellenleiter 3 und Hologrammen, die nach dem in Fig. 1 und 2 dargestellten Verfahren erzeugt worden sind, gegenüber einer bisher bekannten Karte mit Amplitudenhologramm eindeutige Vorteile aufweist. Bei den bisher üblichen Hologrammen stößt man auf die Schwierigkeit, daß ein Beobachter im Raum des Abbildes oder Objektes direkt oder indirekt in die blendende Lichtquelle schaut, die zur Rekonstruktion des Objektes benötigt wird. Dieser Umstand begrenzt das nutzbare Gesichtsfeld ganz erheblich und hat ein ungünstiges Signal/Stör-Verhältnis zur Folge.

Im Gegensatz dazu fällt diese Störquelle beim Wellenleiterhologramm fort. Ein Objekt kann deshalb in einem viel größeren Raumwinkel sowohl aufgezeichnet als auch rekonstruiert werden. Das größere Gesichtsfeld erlaubt, eine verhältnismäßig große Detektoranordnung zu verwenden, so daß auch das Signalübersprechen zwischen benachbarten Photodioden äußerst gering ausfällt.

Ein weiterer Störungsgrund ist im Zustand der Kartenoberfläche über einem auszuwertenden Hologramm zu finden. Es kann vorausgesetzt werden, daß jedes Hologramm 5 wenigstens durch eine Schutzschicht 18 bedeckt ist, wie dies die Fig. 10 und 11 zeigen. Wenn durch den Gebrauch der Karte 1 über einem Hologramm ein Kratzer 28 in der Schutzschicht 18 entstanden ist, dann wird an dieser Stelle beim Auslesen eine Störstrahlung N erzeugt, die sich dem gewünschten Strahlensignal S überlagert. Bei Betrachtung der Fig. 10 ist feststellbar, daß Licht L in parallelen Wellenfronten auf eine Karte 1 mit dem Hologramm 5 fällt. In der unteren Schutzschicht 18 ist der Querschnitt eines tiefen Kratzers 28 angedeutet, der zur Quelle einer streuenden Störstrahlung N wird.

Die vom Hologramm ausgehenden, erwünschten Signalstrahlen S gelangen gleichzeitig mit der Störstrahlung N an die Detektoranordnung 15. Der typische Diffraktionswirkungsgrad eines Amplitudenhologramms liegt bei 6%, d. h. die an die Photodioden gelangende Lichtstärke der Strahlen S entspricht dieser Größe. Es sei angenommen, daß der Kratzer 28 etwa 5% des einfallenden Lichtes L streut und als diffuse Lichtquelle der Störstrahlen N wirkt. Der Störpegel liegt also bei der Detektoranordnung 15 etwa gleich hoch wie der Signalpegel, d. h. das Signal/Stör-Verhältnis ist etwa gleich 0 dB, eine fehlerfreie Auswertung des Hologramms ist unmöglich.

Die Fig. 11 zeigt die Wirkung eines Kratzers 28 in der Schutzschicht 18 über einem Wellenleiter-Hologramm 5. Das einfallende Licht E zur Ausleuchtung des Hologramms ist nun im Wellenleiter 3 eingeschlossen. Es sei als Diffraktionswirkungsgrad ebenfalls 6% angenommen, dann beleuchtet dieser Betrag der einfallenden Wellenfronten sowohl die Detektoranordnung 15 als auch den Kratzer 28. Eine andere, direkte Beleuchtung des Kratzers ist nicht vorhanden. Streut nun der Kratzer wieder etwa 5% des einfallenden Lichtes, dann ergibt dies eine Störstrahlung N der Stärke 6% · 5% = 0,3% des einfallenden Lichtes E, die an die Photodetektoren gelangt. Unter diesen Bedingungen haben also Kratzer kaum schädlichen Einfluß auf die Zuverlässigkeit der Hologramm-Auswertung und das Signal/Stör-Verhältnis ist bei Verwendung einer Karte mit Wellenleiter-Hologramm etwa ein bis zwei Größenordnungen besser. In diesem Fall ist das Verhältnis zudem unabhängig vom Diffraktionswirkungsgrad. Eine erfindungsgemäße Ausweiskarte ist somit bedeutend weniger störanfällig als die bekannten Ausführungen.

Unabhängig vom Verwendungszweck einer Ausweiskarte ist es sehr wichtig, ob eine Fälschung oder Nachahmung derselben schwierig oder unmöglich ist. Bisher bekannte Ausführungen mit magnetischer Aufzeichnung konnten verhältnismäßig leicht kopiert werden. Solche mit konventionellen Hologrammen waren unter Anwendung phototechnischer Verfahren leicht zu lesen. Die Ausführungs gemäß der hier vorliegenden Erfindung mit Wellenleiter-Hologrammen verlangt bedeutende technische Mittel und Kenntnisse für die unbefugte Auswertung und ist daher auch sicherer. Anhand der Fig. 12 wird nun ein Verfahren erläutert, das eine wesentliche Steigerung der Sicherheit der erfindungsgemäßen Ausweiskarte gegen unbefugtes Auslesen erbringt.

Im Zusammenhang mit Fig. 1 ist bereits erklärt worden, daß zwei Gitterkoppler 6 für das Einkoppeln von Licht in den Wellenleiter 3 dienen. Diese zwei Gitterkoppler können Volumenhologramme sein, die nach bekannten Verfahren in der lichtempfindlichen Schicht 4 erzeugt worden sind. Wie die bereits üblichen, aus dem Stand der Technik bekannten Hologramme sind sie für eine Ausleuchtung mit ebenen oder kugelförmigen Lichtwellenfronten ausgebildet und bieten daher dieselbe Sicherheit gegen unbefugtes Lesen wie jene. Diese Sicherheit kann aber dadurch bedeutend verbessert werden, daß für die Herstellung der Koppler-Hologramme eine komplexe Wellenfront verwendet wird, die beispielsweise einem frei wählbaren Lochmuster entspricht. Dieses kodierte Koppler-Hologramm läßt nur dann Licht durch, wenn es mit derselben komplexen Lichtwellenfront beleuchtet wird, die zu seiner Herstellung benutzt worden ist. Für den vorliegenden Fall heißt das, daß der Lichteintritt in den Wellenleiter nur bei Kenntnis des zugehörigen Schlüssels möglich ist. Nach Herstellung der Informationshologramme 5 und des kodierten Kopplerhologramms wird das dabei benutzte, einfache Gitterkopplerhologramm 6 zerstört. Die Karte ist also nur noch über die Verschlüsselung lesbar.

In der Fig. 12 wird nun dargestellt, daß eine Lichtquelle 29, die wenigstens partiell kohärent ist, mit ihrem Licht über ein Linsensystem 30 eine Lochmaske 31 beleuchtet. Die genannte Lichtquelle kann ein Laserstrahlgenerator, oder billiger eine lichtemittierende Diode (LED), oder eine Glühlampe mit passendem Filter sein. Die Lochung der Maske bildet den Schlüssel für den Lichteintritt in den optischen Wellenleiter 3 über das kodierte Koppler-Hologramm 6. Die Löcher in der Maske 31 sind Punktquellen, deren Anordnung die Wellenfronten der Strahlen L bestimmt. Der Wellenleiter 3 wird also nur erregt, wenn diese Lochanordnung richtig bzw. der Schlüssel bekannt ist. Unter diesen Umständen kann das Auslesen einer Ausweiskarte 1 mit Wellenleiter-Hologrammen 5 korrekt erfolgen, indem selektiv die austretenden Signalstrahlen S wie in Fig. 8 ausgewertet werden.

Die zusätzliche Sicherung der erfindungsgemäßen Ausweiskarte gegen unbefugtes Lesen durch einen Schlüssel eröffnet für die Anwendung solcher Karten verschiedene Möglichkeiten. Es können beispielsweise Karten für verschiedene Kategorien von Benutzern ausgegeben werden, die sich durch den Schlüssel unterscheiden lassen und verschiedene Arten der Nutzung bezwecken. Es kann einem Benutzer aber auch ein sekundärer Schlüssel zugeteilt werden, den er bei Benutzung seiner Ausweiskarte über eine Tastatur einzugeben hat und der im Auswertesystem den primären Schlüssel einstellt. Erst wenn der primäre Schlüssel zum betreffenden Koppler-Hologramm auf der Ausweiskarte paßt, ist deren weitere zweckbestimmte Verwendung möglich, z. B. als Kreditkarte.

Die Ausweiskarte gemäß der vorliegenden Erfindung ist wenig störanfällig und kann verhältnismäßig viel Information aufnehmen, da die Hologramme nicht wie bisher groß sein müssen. Die Einzelhologramme darin sind seriell auslesbar und können nach verschiedenen Verfahren löschbar gestaltet werden. Eine passende Auswerteapparatur kann mit einer relativ billigen Lichtquelle auskommen und erlaubt zudem zwecks Sicherung gegen Mißbrauch die Verwendung von Schlüsseln, z. B. in Form von Lochmasken. Ohne großen technischen Aufwand ist daher kein Mißbrauch und auch keine Nachahmung möglich.

## Patentansprüche

1. Ausweiskarte, die Information in holographischer Form enthält, mit einem Substrat (2) als Basis der Karte (1), einer auf das Substrat aufgebrachten transparenten, einen ebenen optischen Wellenleiter bildenden Schicht (3), und mit einer weiteren, auf den genannten Wellenleiter aufgebrachten Schicht (4), die wenigstens ein Information enthaltendes Hologramm (5) einschließt, gekennzeichnet durch eine Lichtkoppelvorrichtung (6), die aus einem weiteren Hologramm besteht, das einem vorbestimmten, speziellen Lichtquellenmuster (31) entspricht, und durch welche nur eine dem speziellen Lichtquellenmuster entsprechende Bezugslichtwelle in den Wellenleiter eingekoppelt werden kann.

2. Ausweiskarte nach Anspruch 1, dadurch gekennzeichnet, daß eine Anzahl separater Hologramme (5), welche Information enthalten, derart in der Karte (1) angeordnet sind, daß sie einzeln durch Zerstörung oder Strahlengangunterbrechung unwirksam gemacht werden können, ohne die Lesbarkeit der verbleibenden Hologramme zu stören.

3. Ausweiskarte nach Anspruch 2, dadurch gekennzeichnet, daß die auf den Wellenleiter (3) aufgebrachte Schicht (4) mit den Informationshologrammen (5) mit einer ursprünglich transparenten Schutzschicht (18) gegen mechanische Abnützung oder Beschädigung bedeckt ist, welche durch äußere Einwirkung stellenweise und selektiv lichtundurchlässig gemacht werden kann.

## Claims

1. Identity card comprising information in holographic form, including a substrate (2) as basis of the card, a transparent layer (3) mounted on said substrate constituting a plane optical waveguide, and a further layer (4) mounted on said waveguide, which contains at least one hologram (5), characterized by light coupling means (6) consisting of a further hologram which corresponds to a predetermined, specific light source pattern (31) and by which only a reference light wave corresponding to said specific light source pattern can be coupled into said wave guide.

2. Identity card in accordance with claim 1, characterized in that a plurality of separate holograms (5) each comprising information are arranged in said card (1) in such a way that they can be made ineffective either by destruction or by beam path interruption without disturbing readability of the remaining holograms.

3. Identity card in accordance with claim 2, characterized in that the layer (4) containing the information holograms (5), which is mounted on said waveguide (3) is covered by an initially transparent layer (8) protecting against mechanical wear or damage, which layer can be made opaque in places and selectively by external action.

**Revendications**

1. Carte d'identité contenant des informations sous forme holographique et comportant un substrat (2) servant d'élément de base de la carte (1), une couche transparente (3) déposée sur le substrat et formant un guide d'ondes optique plan, et une autre couche (4) disposée sur ledit guide d'ondes et qui inclut au moins un hologramme (5) contenant une information, caractérisée par un dispositif (6) de couplage de lumière, qui est constitué par un autre hologramme correspondant à une référence particulière, prédéterminée (31), de source de lumière, et au moyen duquel seule une onde de lumière homologue, correspondant à la référence particuliére de source de lumière, peut être injectée par couplage dans le guide d'ondes.

2. Carte d'identité selon la revendication 1, caractérisé en ce qu'une pluralité d'hologrammes (5) séparés, qui contiennent une information, sont disposés dans la carte (1) de telle manière qu'ils peuvent être rendus séparément inactifs par destruction ou par interruption du trajet de rayonnement, sans que cela ne perturbe la lisibilité des hologrammes substitants.

3. Carte d'identité selon la revendication 2, caractérisé en ce que la couche (4), qui est disposée sur le guide d'ondes (3) et comporte les hologrammes d'information (5), est recouverte par une couche protectrice (18), transparente à l'origine, rélisant une protection vis-à-vis d'une usure ou d'un endommagement mécanique et qui peut être rendu opaque, par endroits et de façon sélective, par une action extérieure.

FIG. 1

$U_S^*$

$U_S$

$U_R$

$U_R^*$

FIG. 2

$U_S$

$U_R$

FIG. 3

$U_S^*$

$U_R^*$

FIG. 4

FIG. 5

FIG. 6

FIG. 7

**FIG. 8**

**FIG. 9**

# FIG. 10

# FIG. 11

# FIG. 12